# EUROPEAN PATENT APPLICATION

(11) **EP 0 919 929 A1**
(43) Date of publication of application: **02.06.1999**
(21) Application number: 98928551.5
(22) Date of filing: 18.06.1998
(51) Int. Cl.: G06F 12/14, G06F 15/00, G06F 15/76

(54) **STORAGE MEDIUM HAVING ELECTRONIC CIRCUIT AND METHOD OF MANAGING THE STORAGE MEDIUM**

(30) Priority: 18.06.1997 JP 161666/97
(71) Applicant: Kabushiki Kaisha Optrom, Miyagi-ken 989-3124 (JP)
(72) Inventor: SHIGETOMI, Takashi Kabushiki Kaisha Optrom, Sendai-shi Miyagi-ken 989-3124 (JP); SAITO, Tetsuo Kabushiki Kaisha Optrom, Sendai-shi Miyagi-ken 989-3124 (JP); KOMAKI, Tsunematsu Advanced Electronics Kabushiki, Taito-ku Tokyo 111-0053 (JP)
(74) Representative: Santarelli, Marc
(86) International application number: JP9802701
(87) International publication number: WO9858319

(57) **Abstract**

The present invention provides a storage medium, such as a disk, that has higher capabilities of preventing reproduction of stored information, providing the security of the information and so on, and a management method thereof. The storage medium is an intelligent disk that has a disk block for storing information and an electronic circuit block for processing information. Furthermore, the electronic circuit block has a ROM for an ID for storing identification information in a rewrite-protected mode at the time of production. Moreover, the disk block and/or the electronic circuit block store a password and/or a digital signature in a rewritable mode at the time of issuing. In addition, the storage medium is identified by the identification information and the password and/or digital signature.

## Description

### Technical Field

The present invention relates to a storage medium having an electronic circuit and a management method thereof.

### Background Art

In order to prevent reproduction of data and programs stored in a conventional storage medium, in particular, a disk and to provide security, there have been proposed a disk that stores data for providing security on its surface at the time of information being stored, and a cartridge disk that has memory and a CPU on its cartridge and stores an Identification and the like.

Nevertheless, hereinafter, if disks are miniaturized to card-sizes and are used as credit cards, electronic purses, and the like, it will become important to prevent reproduction and to protect security. Therefore, above methods are useless

### Disclosure of Invention

The present invention provides a storage medium, such as a disk, that resolves conventional defects described above and has higher capabilities of preventing the reproduction of stored information, providing the security of the information and so on, and a management method thereof.

In order to solve this task, the storage medium of the present invention has an information storage block for storing information and an electronic circuit block for processing information. Furthermore, the storage medium is characterized in that the electronic circuit block has storage means for storing identification information in a rewrite-protected mode at the time of production. The information storage block and/or the electronic circuit block store a password and a digital signature in a rewritable mode. In addition, the storage medium is an optical disk.

Furthermore, a management method of the present invention is a management method of a storage medium having an information storage block for storing information and an electronic circuit block for processing information. Moreover, the management method is characterized in storing identification information in a rewrite-protected mode in the electronic circuit block, at the time of production, storing a password and/or a digital signature in a rewritable mode in the electronic circuit block, at the time of issuing, and identifying the storage medium by the identification information, the password, and/or digital signature. Here, the storage medium is used as a multi-functional smart card. In addition, the storage medium is an optical disk.

The present invention can provides a storage medium having higher capabilities for preventing reproductions of stored information, and provides the security of the information, and a management method thereof.

### Brief Description of Drawings

Fig. 1 is a drawing of the appearance of an ID used in this embodiment;
Fig. 2 is a drawing of a constructive example of the ID used in this embodiment; and
Fig. 3 is a flow chart of an example of a management procedure used for the ID of this embodiment.

### Best Mode for Carrying Out the Invention

In order to describe the present invention in more detail, with reference to attached drawings, a storage medium (hereinafter, this is called an intelligent disk (ID) (20)) that has an electronic circuit and is an embodiment of the present invention will be described as an example.

### (Constructive example of ID of this embodiment)

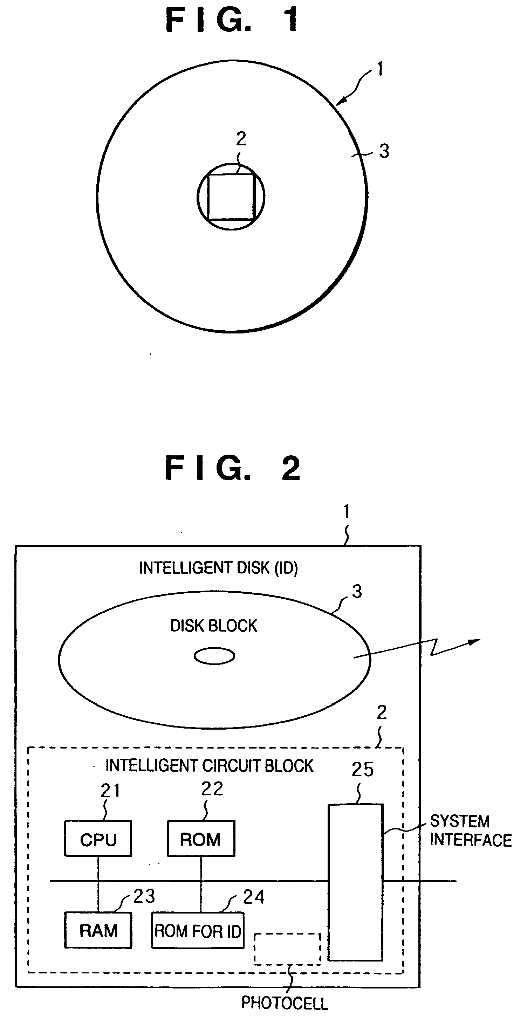

Fig. 1 is a sketch of an intelligent optical disk that is a kind of an ID of this embodiment.

ID 1 comprises a disk block 3, a disk surface storing information, and an intelligent circuit block 2 mounted, for example, in the central portion of the disk block 3, as shown in Fig. 1. Here, although the circuit block 2 is located in the central portion of the disk, the location is not particularly limited, for example, it can be located on a whole side of the disk surfaces or in a middle layer of a disk manufactured in plural layers.

Fig. 2 is a drawing showing the concept of the construction of the ID 1.

In the drawing, the intelligent circuit block 2 has a ROM 22 storing fixed information, and if necessary, the block 2 has a RAM 23 as temporary storage, and a CPU 21 for executing programs stored in the ROM 22 and RAM 23. Furthermore, in case the ID side has an independent power source, a photocell can be included.

The intelligent circuit block 2 exchanges information with an external apparatus via a system interface 25. The interface can be a contact type or a non-contact type, and a bus-connection type or a communication-connection type. Radio communication, optical communication, and the like are conceivable as the communication method.

Furthermore, a ROM 24 for an ID where the inherent Identification is written at the time of production/shipping is added to the circuit block 2. As the ROM 24 for an ID, a destructive type of ROM such as a fuse circuit and a capacitor circuit is preferable so as to prevent alteration hereinafter.

### (Example of management of ID according to this embodiment)

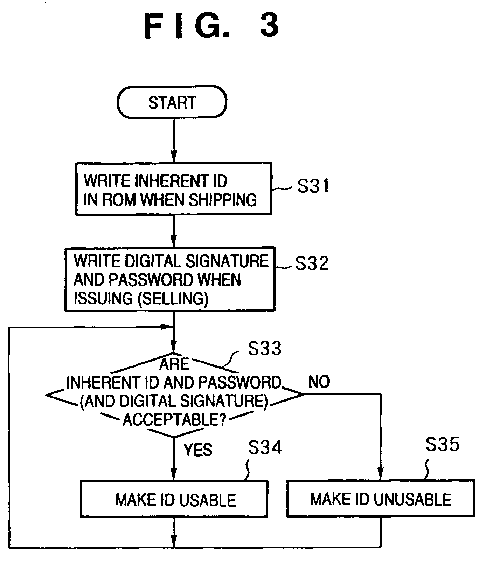

Fig. 3 is a chart showing a management procedure of the ID of this embodiment.

First, at step S31, an inherent Identification is written in the ROM 24 for the ID at the time of production/shipping of the ID.

Next, at step S32, when the ID shipped is issued (sold), a digital signature is written by its issuing corporation on the disk block 3, or in the ROM 22 or RAM 23 while user's password is also written. In addition, as for writing, either of the digital signature and password can be used according to the objective of the ID.

If the ID issued is used (information on the disk block 3 is read), the ID and user are identified by using the inherent Identification at the time of production/shipping and the digital signature and/or password at the time of issuing, at step S33.

If identified, the process goes to step S34 for use of the ID to be permitted, but if not, the process goes to step S35 for the use of the ID to be not permitted.

In addition, not only the inherent Identification is used for identification, but also the ID can be used as a key for encrypting information stored on the disk block 3. If the inherent ID is used in this manner, security protection of the information stored becomes greater.

Hereinbefore, the present invention is described with preferred embodiments. Nevertheless, the present invention is not limited to the above-described embodiments and various changes, additions, and modifications can be made within the spirits and scope as set out in the accompanying claims.

## Claims

1. A storage medium that has an information storage block for storing information and an electronic circuit block for processing information, wherein said electronic circuit block having storage means for storing identification information in a rewrite-protected mode at the time of production.

2. The storage medium according to claim 1, where said information storage block and/or said electronic circuit block store a password and a digital signature in a rewritable mode.

3. The storage medium according to any one of claims 1 and 2, where said storage medium is an optical disk.

4. A management method of a storage medium that has an information storage block storing information and an electronic circuit block processing information, the management method comprising:
a step of storing identification information in a rewrite-protected mode in said electronic circuit block at the time of production;
a step of storing a password and/or a digital signature in a rewritable mode in said information storage block and/or said electronic circuit block; and
a step of identifying the storage medium by said identification information and said password and/or digital signature.

5. The management method of a storage medium according to claim 4, wherein said storage medium is used as a multifunctional smart card.

6. The management method of a storage medium according to any one of claims 4 and 5, wherein said storage medium is an optical disk.
